(19) Europäisches Patentamt

European Patent Office

Office européen des brevets

(11) **EP 4 040 716 B1**

(12) **EUROPEAN PATENT SPECIFICATION**

(45) Date of publication and mention
of the grant of the patent:
**15.04.2026 Bulletin 2026/16**

(21) Application number: **22155485.0**

(22) Date of filing: **07.02.2022**

(51) International Patent Classification (IPC):
*H04L 9/08* (2006.01)    *H04L 9/30* (2006.01)

(52) Cooperative Patent Classification (CPC):
**H04L 9/3093; H04L 9/0852; H04L 9/30;**
H04L 2209/04

(54) **BLINDING TECHNIQUES FOR POST-QUANTUM PUBLIC KEYS**

VERBLINDUNGSTECHNIKEN FÜR ÖFFENTLICHE POSTQUANTENSCHLÜSSEL

TECHNIQUES DE MASQUE POUR CLÉS PUBLIQUES POST-QUANTIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.02.2021  US 202117170595**

(43) Date of publication of application:
**10.08.2022  Bulletin 2022/32**

(73) Proprietor: **VISA INTERNATIONAL SERVICE
ASSOCIATION**
**San Francisco, CA 94128-8999 (US)**

(72) Inventors:
• **MASNY, Daniel**
**P.O. Box 8999 , San Francisco, 94128 (US)**
• **WATSON, Gaven**
**P.O. Box 8999 , San Francisco, 94128 (US)**

(74) Representative: **EIP**
**Fairfax House**
**15 Fulwood Place**
**London WC1V 6HU (GB)**

(56) References cited:
**EP-A1- 3 391 620    EP-B1- 3 391 620**

• **GARETH T DAVIES ET AL: "Cloud-assisted
Asynchronous Key Transport with Post-
Quantum Security", vol. 20191205:080811, 5
December 2019 (2019-12-05), pages 1 - 20,
XP061033902, Retrieved from the Internet
<URL:http://eprint.iacr.org/2019/1409.pdf>
[retrieved on 20191205]**
• **SAARINEN MARKKU-JUHANI O: "Arithmetic
coding and blinding countermeasures for lattice
signatures", JOURNAL OF CRYPTOGRAPHIC
ENGINEERING, SPRINGER BERLIN
HEIDELBERG, BERLIN/HEIDELBERG, vol. 8, no.
1, 21 January 2017 (2017-01-21), pages 71 - 84,
XP036465804, ISSN: 2190-8508, [retrieved on
20170121], DOI: 10.1007/S13389-017-0149-6**

**Description**

BACKGROUND

This disclosure relates generally to post-quantum cryptography and in particular to blinding techniques for post-quantum public keys.

Cryptographic protocols and techniques are used for data security and authentication in a variety of contexts. Certain cryptographic techniques, including many encryption and digital signature algorithms, rely on the assumption that an algorithmic solution to the underlying mathematical problem would require too much computer processing time to be useful in practice. "Too much" time is typically characterized by time complexity, which expresses the scaling behavior of the amount of time to solve the problem with size of the input (e.g., a cryptographic key having a particular number of bits). In one characterization, a "difficult" problem is one that requires exponential time to solve while an "easy" problem may be solved in polynomial time. Thus, for a given input size n, an exponential-time solution may take years while a polynomial-time solution may take less than a second, or less than an hour. Many of today's commonly used cryptographic techniques, including public key encryption, are based on the Discrete Logarithm problem, which is an exponential-time problems for existing binary algorithms. EP 3391620 A1 discloses using a cryptographic nonce as a blinding factor to obscure a public key.

Quantum computers, which are different from existing binary computers, are currently being developed and are expected to become increasingly accessible. Quantum computers operate on quantum bits ("qubits"), which can exist in superposed states, not just in the binary (0 and 1) states of the bits in classical computers. By exploiting the quantum properties of superposition and entanglement, quantum computers can implement algorithms that cannot be implemented in a binary computer. Such quantum algorithms may be able to solve certain problems faster than binary algorithms. For example, Shor's algorithm, formulated in 1994 (Shor, Peter W., "Algorithms for quantum computation: Discrete logarithms and factoring," Foundations of Computer Science 1994 Proc. 35th Annual Symposium, IEEE 1994) is a quantum algorithm for factoring integers, which can be used to solve the Discrete Logarithm problem for public-key cryptography in polynomial time, as compared to classical algorithms that can solve the problem only in exponential or sub-exponential time. As such, quantum computers can break the assumptions of cryptographic security that hold for binary computers executing binary algorithms. Different cryptographic techniques may therefore be desirable.

SUMMARY

Embodiments disclosed herein relate to blinding techniques that can be used to obfuscate or otherwise modify a quantum-secure public key (and the corresponding private, or secret, key). In some embodiments, a quantum-secure public/private key pair can be implemented using lattice-based techniques. Blinding of a public key can include selecting a blinding parameter, which can be a vector or matrix, and applying the blinding parameter to the public key. A corresponding modification can be applied to the private, or secret, key such that data encrypted using the blinded public key can be decrypted using the blinded private, or secret, key. A variety of specific blinding techniques can be used; in some instances, the blinding technique can depend on the type of public/private key pair. When a device needs to send a public key in the clear, e.g., in the course of establishing a secure communication session, the device can generate a blinded public key from its static (or persistent) public key and send the blinded key instead of the static public key. If the static public key is needed, it can be sent in encrypted form after the secure communication session is established.

Some embodiments relate to a method performed by a first electronic device. The method can comprise obtaining a static key pair comprising a static secret key and a static public key, where the static key pair conforms to a lattice-based key encapsulation mechanism. The method can further comprise selecting a blinding parameter, where the blinding parameter includes at least one vector or matrix selected by random sampling from a distribution associated with the lattice-based key encapsulation mechanism. The method can further comprise computing a blinded public key using the static public key and the blinding parameter and computing a blinded secret key using the static secret key and the blinding parameter. The method can further comprise sending the blinded public key to a second electronic device, receiving an encrypted message from the second electronic device, and decrypting the encrypted message using the blinded secret key.

Some embodiments relate to an electronic device that can comprise a storage system, a network interface, and a processor coupled to the storage system and the network interface. The storage system can be configured to store a static key pair comprising a static secret key and a static public key, where the static key pair conforms to a lattice-based key encapsulation mechanism. The network interface can be configured to communicate with another electronic device. The processor can be coupled to the storage system and the network interface. The processor can be configured to: select a blinding parameter, where the blinding parameter includes at least one vector or matrix selected by random sampling from a distribution associated with the lattice-based key encapsulation mechanism; compute a blinded public key using the static public key and the blinding parameter; compute a blinded secret key using the static secret key and the blinding parameter; send the blinded public key to the other electronic device; receive a first encrypted message from the other electronic device; and decrypt the first encrypted message using the blinded secret key.

Some embodiments relate to a computer-readable storage medium having stored therein program instructions that, when executed by a processor of a first electronic device, cause the processor to perform a method that can include: retrieving, from a storage system, a static key pair comprising a static secret key and a static public key, wherein the static key pair conforms to a lattice-based key encapsulation mechanism; selecting a blinding parameter, wherein the blinding parameter includes at least one vector or matrix selected by random sampling from a distribution associated with the lattice-based key encapsulation mechanism; computing a blinded public key using the static public key and the blinding parameter; computing a blinded secret key using the static secret key and the blinding parameter; sending the blinded public key to a second electronic device; receiving an encrypted message from the second electronic device; and decrypting the encrypted message using the blinded secret key.

The following detailed description, together with the accompanying drawings, will provide a better understanding of the nature and advantages of the claimed invention.

BRIEF DESCRIPTION OF THE DRAWINGS

FIG. 1 shows a flow diagram of a lattice-based key encapsulation mechanism (KEM) that provides quantum-secure public key encryption between two entities

FIG. 2 shows a flow diagram of a process for one-way authentication between two entities using lattice-based keys.

FIG. 3 shows a flow diagram of a process for two-way authentication between two entities using lattice-based keys.

FIG. 4 shows a flow diagram of a process for blinding a lattice-based public/private key pair of Type A according to some embodiments.

FIG. 5 shows a flow diagram of a process for blinding a lattice-based public/private key pair of Type B according to some embodiments.

FIG. 6 shows a flow diagram of a process for blinding a lattice-based public/private key pair of either Type A or Type B according to some embodiments.

FIG. 7 is a flow diagram of a process for communicating between entities according to some embodiments.

FIG. 8 shows a flow diagram of a process for one-way authentication between two entities using lattice-based keys according to some embodiments.

FIG. 9 shows a flow diagram of a process for two-way authentication between two entities using lattice-based keys according to some embodiments.

FIG. 10 shows a simplified block diagram of a general-purpose computer system configured to execute various processes according to some embodiments.

TERMS

The following terms may be used herein.

A "server computer" may include a powerful computer or cluster of computers. For example, the server computer can be a large mainframe, a minicomputer cluster, or a group of servers functioning as a unit. In one example, the server computer may be a database server coupled to a Web server. The server computer may comprise one or more computational apparatuses and may use any of a variety of computing structures, arrangements, and compilations for servicing the requests from one or more client computers.

A "client" or "client computer" may include a computer system or other electronic device that communicates with a server computer to make requests of the server computer and to receive responses. For example, the client can be a laptop or desktop computer, a mobile phone, a tablet computer, a smart speaker, a smart-home management device, or any other user-operable electronic device.

A "memory" may include suitable device or devices that can store electronic data. A suitable memory may comprise a non-transitory computer readable medium that stores instructions that can be executed by a processor to implement a desired method. Examples of memories may comprise one or more memory chips, disk drives, etc. Such memories may operate using any suitable electrical, optical, and/or magnetic mode of operation.

A "processor" may include any suitable data computation device or devices. A processor may comprise one or more microprocessors working together to accomplish a desired function. The processor may include a CPU that comprises at least one high-speed data processor adequate to execute program components for executing user and/or system-generated requests. The CPU may be a microprocessor such as AMD's Athlon, Duron and/or Opteron; IBM and/or Motorola's PowerPC; IBM's and Sony's Cell processor; Intel's Celeron, Itanium, Pentium, Xeon, and/or XScale; and/or the like processor(s).

A "communication device" may include any electronic device that may provide communication capabilities including communication over a mobile phone (wireless) network, wireless data network (e.g., 3G, 4G, or similar networks), Wi-Fi, Wi-Max, or any other communication medium that may provide access to a network such as the Internet or a private network. Examples of communication devices include mobile phones (e.g., cellular phones), PDAs, tablet computers, net books, laptop computers, personal music players, hand-held specialized readers, wearable devices (e.g., watches), vehicles (e.g., cars), etc. A communication device may comprise any suitable hardware and software for performing such functions, and may also include multiple devices or components (e.g., when a device has remote access to a network by tethering to another device-i.e., using the other device as a relay-both devices taken together may be considered a single communication device).

The terms "post-quantum" and "quantum-secure" are used herein to characterize cryptographic keys and encryption schemes that are designed to be difficult or impractical for both quantum and binary computers to solve, meaning that there is currently no known quantum or binary algorithm that can be used to solve the underlying cryptographic problem in a reasonable amount of time (e.g., polynomial time or faster).

An "encryption key" may include any data value or other information suitable to cryptographically encrypt data. A "decryption key" may include any data value or other information suitable to decrypt encrypted data. In some cases, the same key used to encrypt data may also be usable to decrypt the data. Such a key is referred to as a "symmetric encryption key."

The term "public/private key pair" (also referred to as a "key pair") may include a pair of linked cryptographic keys generated by or provided to an entity (e.g., a computer, communication device, or other electronic device) that "owns" the key pair. A public/private key pair may be used with an asymmetric encryption algorithm so that data encrypted using the "public" key of the pair can be decrypted using the "private," or "secret," key of the pair (and vice versa). The public key of a key pair may be provided to other entities and used for public functions such as encrypting a message to be sent to the owner of the key pair or for verifying a digital signature that was purportedly generated by the owner of the key pair. The public key is typically authorized or verifiable by a body known as a Certification Authority (CA), which stores the public key in a database and distributes it to any entity that requests it. The private, or secret, key is typically stored in a secure storage medium and known only to the owner of the key pair. It should be understood that some cryptographic systems may provide key recovery mechanisms for recovering lost secret keys and avoiding data loss.

An "ephemeral key pair" may include a public key (an "ephemeral public key") and a secret key (an "ephemeral secret key" or "ephemeral private key") generated for use in a single transaction or other communication session, after which the ephemeral key pair is typically deleted. Any appropriate cryptographic technique for generating key pairs can be used to generate an ephemeral key pair.

A "static key pair", also referred to as a "persistent key pair," may include a public key (a "static public key" or "persistent public key") and a secret key (a "static secret key" or "persistent secret key") that are maintained by an entity over a period of time and may be reused across different transactions or other communication sessions with different entities. Typically, though not necessarily, a static secret key may be stored securely, e.g., in a hardware security module (HSM) or secure element (SE) that may require a password or other form of authorization (beyond mere possession of the device that stores the static secret key) to enable access to the static secret key. A static public key may be bound to an identity through the use of a digital certificate.

A "blinded key," such as a "blinded public key" or "blinded secret key," may include a static key that has been obfuscated or otherwise modified from its original value by combination with another data element, referred to herein as a "blinding parameter," which may be a vector element, a matrix element, or a combination of a vector element and a matrix element. Examples of blinding parameters for post-quantum public and secret keys are described below.

A "digital signature" may refer to the result of applying an algorithm based on a public/private key pair (typically a static key pair), which allows a signing entity (or "prover") to manifest, and a verifying entity (or "verifier") to verify, the authenticity and integrity of a message or document. The prover acts by applying the private key to encrypt the message, and the verifier acts by applying the public key to decrypt the encrypted message. On the assumption that only the prover has the private key, the verifier's ability to decrypt the message can be treated as authentication of the signer's identity and of the integrity of the message or document. A certificate or other data that includes a digital signature of a signing entity is said to be "signed" by the signing entity.

A "certificate" or "digital certificate" may include an electronic document or data file that uses a digital signature to bind a static public key with other data associated with an identity. The certificate may include various data fields, such as a legal name of the identity, a serial number of the certificate, a range of valid dates for the certificate (e.g., issue and expiration dates), certificate-related permissions, etc. A certificate may also contain a hash of the data in the certificate including the data fields. A certificate is typically signed by a certificate authority.

A "certificate authority" (CA) may include one or more server computers operatively coupled to issue certificates to entities. The CA may prove its identity using a CA certificate, which includes the CA's public key. The CA certificate may be signed by another CA's private key or by the same CA's private key (a "self-signed" certificate). The CA may maintain a database of all certificates issued by the CA and may also maintain a list of revoked certificates. In a typical process, the CA receives an unsigned certificate from an entity whose identity is known to the CA. The unsigned certificate includes a public key of the entity, one or more data fields, and a hash of the data in the certificate. The CA signs the certificate with a private key corresponding to the public key included in the CA certificate. The CA may then store the signed certificate in a database and issue the signed certificate to the entity. In some cases, a CA may, upon request, provide a copy of a signed certificate from its database to an entity that requests it.

A "shared secret" may include any data value or other information known only to authorized parties in a secure communication. A shared secret can be generated in any suitable manner, from any suitable data. In current practice, a Diffie-Hellman-based algorithm such as Elliptic-Curve Diffie-Hellman (ECDH) may be used. ECDH, however, is regarded as not being quantum-secure. Some examples described below relate to establishing a shared secret in a quantum-secure manner.

A "session key" may include any key that is generated during a communication session to encrypt and/or decrypt data communicated between participants in the communication session. A session key can be generated, for example, from a shared secret known to both parties to the secure communication session. For example, a session key may be derived using a key derivation function and the shared secret. In some instances, the session key is a symmetric encryption key, although this is not required and a session key may include an encryption key and a corresponding decryption key.

A "nonce" (or "cryptographic nonce") may include any number, string, bit sequence, or other data value intended to be used in association with a single communication session. In some cases, a nonce may be randomly or pseudo-randomly generated. Typically, a nonce is of sufficient length (or size) as to provide an insignificant likelihood of independently generating the same nonce value multiple times.

DETAILED DESCRIPTION

The following description of exemplary embodiments of the invention is presented for the purpose of illustration and description. It is not intended to be exhaustive or to limit the invention to the precise form described, and persons skilled in the art will appreciate that many modifications and variations are possible. The embodiments have been chosen and described in order to best explain the principles of the invention and its practical applications to thereby enable others skilled in the art to best utilize the invention in various embodiments and with various modifications as are suited to the particular use contemplated.

Certain embodiments described herein relate to techniques that can be applied to post-quantum, or quantum-secure, public/private key pairs to "blind" the keys in a manner that can provide further security enhancements. Such key pairs may be used similarly to conventional public/private key pairs, e.g., in authentication operations that use zero-knowledge proofs to demonstrate to a "verifier" that the party being authenticated (a "prover") has possession of a secret (the private, or secret, key) without revealing the secret. In some embodiments, a lattice-based key encapsulation mechanism (KEM) is used to provide post-quantum public key encryption, and a brief description of a lattice-based KEM is provided to establish context. After establishing this context, embodiments related to blinding of lattice-based public keys will be described.

**Quantum-Secure Transactions Using Lattice-Based Key Pairs**

One option for generating quantum-secure digital signatures is to use lattice-based one way functions, which rely on the "learning with errors" problem, for the digital signatures. Unlike the discrete logarithm problem, the learning with errors problem is hard to solve (e.g., it is impractical to solve because it requires exponential time) for quantum computers. The learning with errors assumption asserts that the lattice-based one way function is hard to invert given a uniformly sampled matrix $A \in \mathbb{Z}_q^{n \times m}$ and a distribution $\chi$, where the lattice function $f_{A_\chi}(\vec{x})$ is equal to the matrix $A$ multiplied by a secret vector $\vec{x}$ (e.g., the secret value/key) plus an error vector $\vec{e}$ sampled from the distribution $\chi$:

$$\vec{y} = f_{A\chi}(\vec{x}) = \vec{x}A + \vec{e} : \vec{e} \leftarrow \chi^m \qquad (1)$$

In this example, a public vector $\vec{y}$ (e.g., the "image") corresponding to the secret vector $\vec{x}$ (e.g., the "preimage") is determined by applying the lattice function $f_{A_\chi}()$ to the secret vector $\vec{x}$. The lattice technique can be used to perform a zero knowledge proof. In the lattice-based example, the prover can prove to the verifier that it possess the secret vector $\vec{x}$ using a commitment $\vec{a}$ based on a random value vector $\vec{r}$, selected by the verifier, where $\vec{r} \leftarrow \mathbb{Z}_q^n$. Here, the verifier has possession of the public vector $\vec{y}$ corresponding to the secret vector $\vec{x}$.

The prover determines a commitment $\vec{a}$ based on the matrix $A$, the random value vector $\vec{r}$, and the error vector $\vec{e}$:

$$\vec{a} = \vec{r}A + \vec{e} : \vec{e} \leftarrow \chi^m \qquad (2)$$

Then the prover sends the commitment $\vec{a}$ to the verifier.

In response to receiving the commitment $\vec{a}$, the verifier determines a random or pseudo random value for a commitment c and sends the commitment c to the prover. In response to receiving the commitment c, the prover determines a response $\vec{z}$ based on the secret vector $\vec{x}$, the commitment c, and the random vector $\vec{r}$:

$$\vec{z} = \vec{x}c + \vec{r} \qquad (3)$$

The prover sends the response $\vec{z}$ to the verifier. In response to receiving the response $\vec{z}$, the verifier can determine whether the matrix A multiplied by the response $\vec{z}$ is approximately equal the public vector $\vec{y}$ plus the commitment $\vec{a}$ in order to determine whether the prover possesses the secret vector $\vec{x}$:

$$\vec{z}A \overset{?}{\approx} \vec{y}c + \vec{a} \qquad (4)$$

The determination by the verifier uses approximation ($\approx$) instead of equality ($=$) because the public vector $\vec{y}$ is based on the error vector $\vec{e}$ since $\vec{y} = f_{A_\chi}(\vec{x})$.

Lattice-based cryptography is further described in Regev, Oded. "On lattices, learning with errors, random linear codes, and cryptography." Journal of the ACM (JACM) 56.6 (2009): 34.

In various implementations, lattice-based cryptography incorporates public/private key pairs of two distinct types, referred to herein as "Type A" and "Type B" key pairs. In a public/private key pair of Type A, the private, or secret, key *(sk)* can be defined as a vector $\vec{s} \in \mathbb{Z}_q^n$, and the corresponding public key *(pk)* can be defined as:

$$pk = A\vec{s} + \vec{e} \qquad (5)$$

for a uniformly sampled matrix $A \in \mathbb{Z}_q^{n \times m}$ and a small noise vector $\vec{e} \in \mathbb{Z}_q^n$. In a public/private key pair of Type B, the private, or secret, key *sk* can be defined as a small matrix $R \in \mathbb{Z}_q^{n \times m}$, and the corresponding public key *pk* can be defined as:

$$pk = RA \qquad (6)$$

for a uniformly sampled matrix $A \in \mathbb{Z}_q^{n \times m}$.

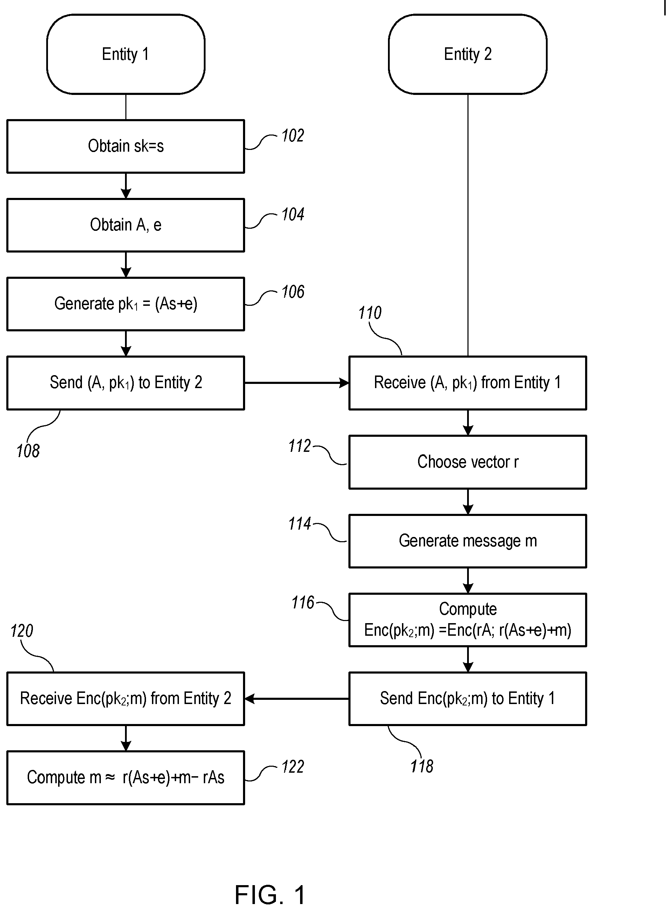

FIG. 1 shows a flow diagram of a lattice-based key encapsulation mechanism (KEM) process 100 that provides quantum-secure public key encryption between two entities ("Entity 1" and "Entity 2"). Entity 1 and Entity 2 can be, for example, two computer systems or other electronic devices that exchange encrypted messages. At block 102, Entity 1 obtains (e.g., by generating or retrieving from secure storage) a secret key defined as a vector $\vec{s} \in \mathbb{Z}_q^n$. At block 104, Entity 1 obtains (e.g., by generating or retrieving from secure or other storage) a parameter matrix $A \in \mathbb{Z}_q^{n \times m}$ and noise vector $\vec{e} \in \mathbb{Z}_q^n$. At block 106, Entity 1 can generate a public key $pk = A\vec{s} + \vec{e}$. In some cases, generation of a static key pair can be performed once, with the key pair and the parameter matrix being stored for later reuse in subsequent executions of process 100. At block 108, Entity 1 can send parameter matrix *A* and public key *pk* to Entity 2.

At block 110, Entity 2 can receive *A* and *pk* from Entity 1. At block 112, Entity 2 can choose a random value vector $\vec{r}$, where $\vec{r} \leftarrow \mathbb{Z}_q^n$. At block 114, Entity 2 can generate a message m, which can be, for example, a random nonce. At block 116, Entity 2 can generate an encrypted message, denoted as $Enc(pk_2; m)$, by using $\vec{r}A$ as a key to encrypt a message created by computing $\vec{r}(A\vec{s} + \vec{e}) + m$. It should be noted that the quantity $(A\vec{s} + \vec{e})$ was provided as public key $pk$ by Entity 1 and that Entity 2 does not know either $\vec{s}$ or $\overline{e}$. At block 118, Entity 2 can send the encrypted message $Enc(pk_2; m)$ to Entity 1.

At block 120, Entity 1 can receive the encrypted message $Enc(pk_2; m)$ from Entity 2. At block 122, Entity 1 can compute the (approximate) decrypted message according to:

$$m \approx \vec{r}(A\vec{s} + \vec{e}) + m - \vec{r}A\vec{s}. \qquad\qquad (7)$$

Entity 1 knows $A$, $s$, and $e$ and can therefore solve for $m$ without knowing $\vec{r}$.

The process of FIG. 1 can provide quantum-secure public-key encryption. In some instances, it is desirable to provide authentication capability, leveraging the concepts of digital certificates and digital signatures. To support authentication, the public and secret keys of an entity that is to be authenticated may need to be persistent, or static, keys that are used across multiple transactions or other communication sessions. In some instances, the public key may be stored in a digital certificate.

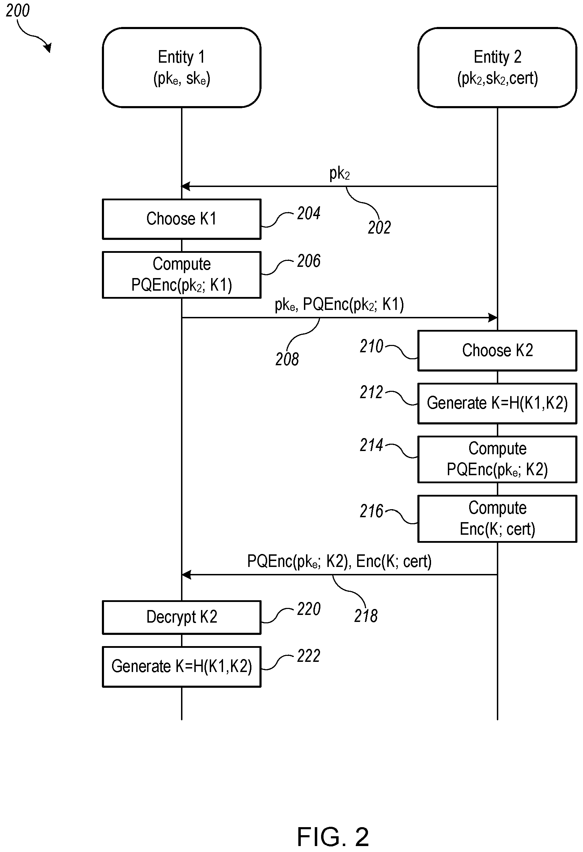

FIG. 2 shows a flow diagram of a process 200 for one-way authentication between two entities ("Entity 1" and "Entity 2") using lattice-based keys. Entity 1 and Entity 2 can be, for example, two computer systems or other electronic devices that are to participate in a secure communication session. It is assumed that Entity 1 desires to authenticate Entity 2. It is also assumed that Entity 2 has a static lattice-based public/private key pair $(pk_2, sk_2)$ and a digital certificate *(cert)* while Entity 1 has an ephemeral lattice-based public/private key pair $(pk_e, sk_e)$. The ephemeral key pair may be generated, e.g., in response to Entity 1 determining that a secure communication session with Entity 2 should be established.

Process 200 can begin at message 202, where Entity 2 sends its public key $pk_2$ to Entity 1. Public key $pk_2$ can be a lattice-based public key of either Type A or Type B, and sending a lattice-based public key can include sending a parameter matrix A associated with the public key (e.g., a parameter matrix A as described above). At block 204, Entity 1 can choose an arbitrary parameter $K1$, which can be a random value suitable for use as a symmetric key. At block 206, Entity 1 can encrypt parameter $K1$ using public key $pk_2$ and a post-quantum encryption algorithm, denoted as function $PQEnc(\cdot)$. Function $PQEnc(\cdot)$ can implement lattice-based public key encryption, e.g., as described above with reference to FIG. 1. At message 208, Entity 1 can send its ephemeral public key $pk_e$ and the encrypted $K1$ to Entity 2. Entity 2 has the secret key $sk_2$ and can decrypt $K1$.

At block 210, Entity 2 can choose another arbitrary parameter K2, which can also be a random value suitable for use as a symmetric key. At block 212, Entity 2 can generate a session key *(K)*, for example by using a hash function $H(K1, K2)$. At block 214, Entity 2 can encrypt parameter $K2$ using the ephemeral public key $pk_e$ received via message 208 and a post-quantum encryption algorithm $PQEnc(\cdot)$. At block 216, Entity 2 can also encrypt its certificate *(cert)* using session key $K$ and an encryption algorithm denoted as function $Enc(\cdot)$. Function $Enc(\cdot)$ can rely on the secrecy of session key K and can be, for instance, a conventional symmetric encryption algorithm. At message 218, Entity 2 can send the encrypted parameter K2 and the encrypted certificate to Entity 1.

At block 220, Entity 1 can decrypt the encrypted parameter K2 using its ephemeral secret key $sk_e$. At block 222, Entity 1 can generate session key $K$ using the same computation used by Entity 2 at block 212. Thereafter, Entity 1 can decrypt the message containing the certificate and can proceed with certificate validation and/or digital signature verification using appropriate cryptographic techniques. (For instance, all keys involved may be quantum-secure keys and quantum-secure techniques as described above can be used to perform signature verification.) Once verification is complete, Entity 1 and Entity 2 can continue to communicate securely using session key K.

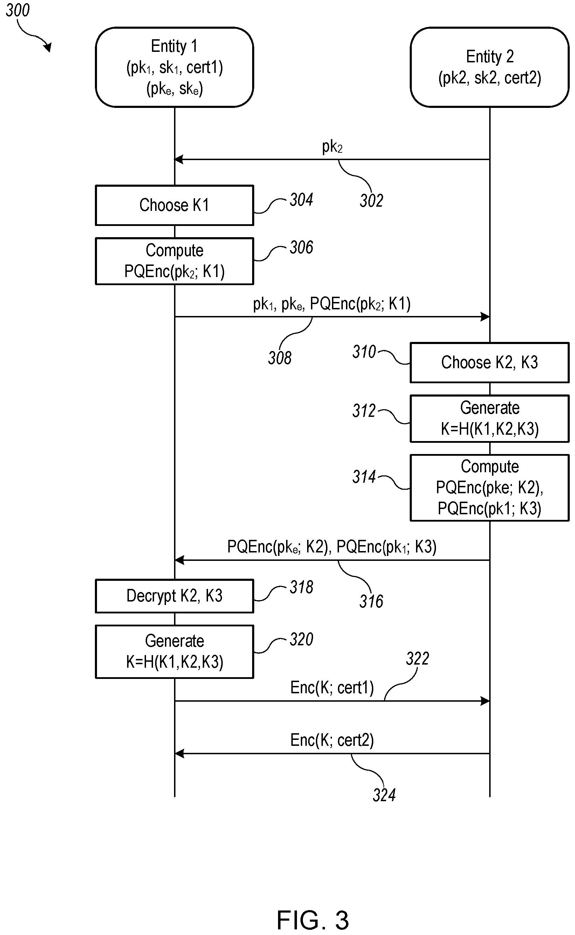

While FIG. 2 shows an example of one-way authentication, in some cases two-way authentication may be desired. FIG. 3 shows a flow diagram of a process 300 for two-way authentication between two entities ("Entity 1" and "Entity 2") using lattice-based keys. Entity 1 and Entity 2 can be, for example, two computer systems or other electronic devices that are to participate in a secure communication session. It is assumed that Entity 1 desires to authenticate Entity 2 and vice versa. It is also assumed that Entity 1 has a static post-quantum public/private key pair $(pk_1, sk_1)$ and a digital certificate $(cert1)$ and that Entity 2 also has post-quantum public/private key pair $(pk_2, sk_2)$ and a digital certificate *(cert2)*. In this example, Entity 1 also uses an ephemeral post-quantum public/private key pair $(pk_e, sk_e)$, similarly to FIG. 2.

Process 300 can begin at message 302, where Entity 2 sends its public key $pk_2$ to Entity 1. Public key $pk_2$ can be a lattice-based public key of either Type A or Type B, and sending a lattice-based public key can include sending a parameter matrix A associated with the public key (e.g., a parameter matrix A as described above). At block 304, Entity 1 can choose an arbitrary parameter $K1$, which can be a random value suitable for use as a symmetric key. At block 306, Entity 1 can encrypt parameter $K1$ using public key $pk_2$ and a post-quantum encryption algorithm $PQEnc(\cdot)$. At message 308, Entity 1 can send its static ephemeral public key $pk_1$, its ephemeral public key $pk_e$, and the encrypted $K1$ to Entity 2. Entity 2 has the secret key $sk_2$ and can decrypt $K1$.

At block 310, Entity 2 can choose two additional arbitrary parameters K2 and K3, each of which can be a random value suitable for use as a symmetric key. At block 312, Entity 2 can generate a session key *(K),* for example by using a hash function *H(K1, K2, K3).* At block 314, Entity 2 can encrypt parameter *K2* using the ephemeral public key $pk_e$ received via message 308 and a post-quantum encryption algorithm *PQEnc*($\cdot$) and encrypt parameter K3 using the static public key $pk_1$ received via message 308 and a post-quantum encryption algorithm *PQEnc*($\cdot$). At message 316, Entity 2 can send the encrypted parameters K2 and K3 to Entity 1.

At block 318, Entity 1 can decrypt parameter *K2* using its ephemeral secret key $sk_e$ and decrypt parameter K3 using its static secret key $sk_1$. At block 320, Entity 1 can generate session key K using the same computation used by Entity 2 at block 312. Thereafter, Entity 1 and Entity 2 can exchange digital certificates encrypted using session key K, as shown at messages 322, 324. Each entity can decrypt the message containing the certificate and can proceed with certificate validation and/or digital signature verification using appropriate cryptographic techniques. (For instance, all keys involved may be quantum-secure keys and quantum-secure techniques as described above can be used to perform signature verification.) Once verification is complete, Entity 1 and Entity 2 can continue to communicate securely using session key K.

**Blinding Protocols for Lattice-Based Key Pairs**

It should be noted that processes 200 and 300 include the sending of static public keys in the clear. For instance, in process 200, Entity 2 sends its static public key $pk_2$ in the clear at message 202. In process 300, Entity 2 sends its static public key $pk_2$ in the clear at message 302, and Entity 1 sends its static public key $pk_1$ in the clear at message 308.

In some applications of cryptography (including conventional as well as post-quantum cryptography), it may be desirable for an entity to avoid repeatedly giving out the same public key in the clear. For instance, a device (or entity) that provides the same public key to different entities in connection with different transactions can be tracked across transactions, which may allow third parties to glean information about the activities of the device (or a user associated with the device). In addition, if a key pair becomes compromised (e.g., through hacking), all of the device's transactions using that key pair may no longer be secure. One option is to generate ephemeral key pairs for each transaction. However, an ephemeral key pair may not support authentication, since there is no persistent association of an ephemeral key pair with an identity. In addition, generating key pairs is computationally expensive and may not be appropriate for some devices, including low-power devices such as payment cards or the like.

Accordingly, some embodiments of the invention provide blinding techniques that can be applied to quantum-secure keys and in particular to lattice-based key pairs. "Blinding" of a key, as used herein, refers to obfuscation or modification of a cryptographic key by combination with another data element, referred to herein as a "blinding parameter." The blinding parameter can be chosen randomly for each transaction. The blinding modification can be computationally simple, as compared to generating an ephemeral key pair. The blinded public key, instead of the static public key, can be sent in the clear and used to perform operations to establish a session key, such as the operations shown in FIGs. 2 and 3. Once the session key is established, the actual public key can be sent in an encrypted message and used for authentication. Examples of blinding techniques for non-quantum-secure public keys are described in WO 2017/004470 A1; however, these techniques might not provide blinding for quantum-secure key pairs such as lattice-based key pairs. Examples of blinding techniques that can be applied to quantum-secure key pairs, in particular to lattice-based key pairs, will now be described. In some embodiments, the blinding technique may depend on the whether the key pair is of Type A or Type B (as described above).

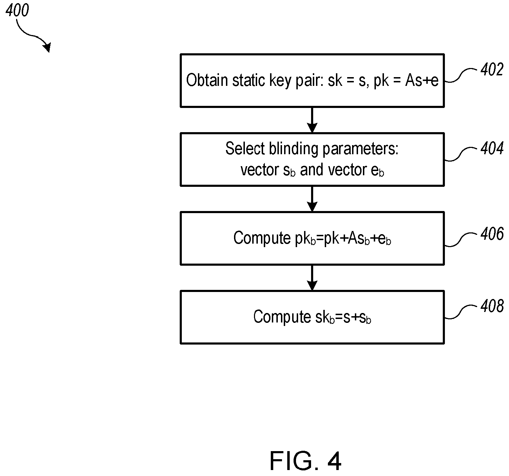

FIG. 4 shows a flow diagram of a process 400 for blinding a lattice-based public/private key pair of Type A according to some embodiments. Process 400 can be performed by any entity (e.g., computer system or other electronic device) that participates in secure communication and uses a lattice-based static key pair of Type A. Process 400 can begin at block 402, with obtaining a lattice-based static key pair. As described above, for a Type A lattice-based key pair, the private, or secret, key *(sk)* can be defined as a vector $\vec{s}$ and the corresponding public key *(pk)* can be defined as $pk = A\vec{s} + \vec{e}$. This can be a static key pair. In some embodiments, the secret key can be stored in secure storage accessible only to the entity that owns the key pair, while the public key (and the parameter matrix A) can be stored in local storage of the entity and/or at a certificate authority (CA). Obtaining the static key pair can include reading the stored secret and public keys.

At block 404, blinding parameters are selected. In this example, the blinding parameters are a blinding vector $\vec{s_b} \in \mathbb{Z}_q^n$, which can be selected by randomly sampling the same distribution as vector $\vec{s}$, and a blinding error vector $\vec{e_b} \in \mathbb{Z}_q^n$, which can be selected by randomly sampling the same distribution as vector $\vec{e}$. At block 406, a blinded public key ($pk_b$) can be computed as:

$$pk_b = pk + A\vec{s_b} + \vec{e_b}. \qquad (8)$$

At block 408, a blinded secret key ($sk_b$) can be computed as:

$$sk_b = \vec{s} + \overrightarrow{s_b} \,. \qquad\qquad (9)$$

Once generated, the blinded public/private key pair can be used in communications with other entities. For instance, the blinded public key $pk_b$ can be sent to another entity in place of the unblinded public key $pk$ during a process of establishing a session key. In some embodiments, the other entity does not need to know that the public key has been blinded. If the static public key is needed by the other entity, e.g., for authentication, the entity that initially provided a blinded public key can send the public key after a session key has been established, with the public key being sent in an encrypted message rather than being sent in the clear.

Process 400 blinds public keys across the set of Type-A public keys for a given parameter matrix $A$ but not necessarily across different parameter matrices $A$ and $A'$. (For instance, given two blinded public keys $pk_b$ and $pk_b'$ generated with two different parameter matrices $A$ and $A'$, it may be possible to determine that the two blinded public keys do not correspond to the same static public key, particularly where the parameter matrix is communicated along with the public key; however, as long as all blinded public keys are generated from the same parameter matrix, information about the static public key cannot be inferred.) It should also be noted that, without knowing blinding parameters $\overrightarrow{s_b}$ and $\overrightarrow{e_b}$, the unblinded public key cannot be computed from the blinded public key. Accordingly, an entity that performs process 400 can provide blinded public key $pk_b$ in the clear without revealing the static public *key pk.* Like the unblinded key pair *(pk, sk),* blinded key pair $(pk_b, sk_b)$ has the property that messages encrypted using $pk_b$ can be decrypted using $sk_b$. Thus, an entity can use process 400 to generate a new blinded key pair $(pk_b, sk_b)$ for each transaction or other communication session in which the entity participates.

Process 400 is an example of a minimally invasive blinding process, in that the error term (which represents noise and can lead to incorrect results when it becomes large) is controlled. Thus, the blinding process 400 can be used with minimal effect on correctness of encryption/decryption operations.

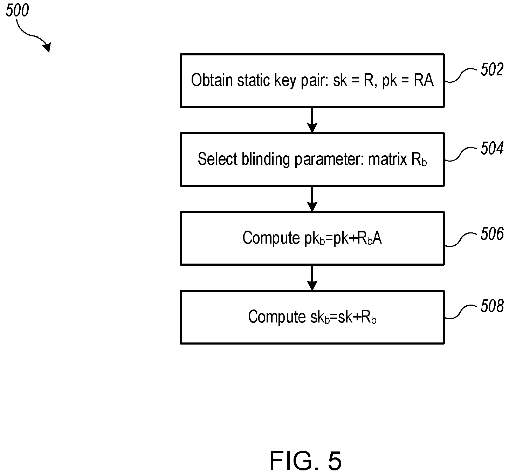

Process 400 applies to a lattice-based key pair of Type A. FIG. 5 shows a flow diagram of a process 500 for blinding a lattice-based public/private key pair of Type B according to some embodiments. Process 500 can be performed by any entity (e.g., computer system or other electronic device) that participates in secure communication and uses a lattice-based static key pair of Type B. Process 500 can begin at block 502, with obtaining a lattice-based static key pair. As described above, for a Type B lattice-based key pair, the private, or secret, key *(sk)* can be defined as $sk$ = R for a small matrix $R \in \mathbb{Z}_q^{n \times m}$, and the corresponding public key $pk$ can be defined as $pk$ = RA for a parameter matrix A. At block 504, a blinding parameter is selected. In this example, the blinding parameter is a matrix $R_b \in \mathbb{Z}_q^{n \times m}$, which can be selected by randomly sampling the same distribution as matrix R. At block 506, a blinded public key $pk_b$ can be computed as:

$$pk_b = pk + R_b A \,. \qquad\qquad (10)$$

At block 508, a blinded secret key $sk_b$ can be computed as:

$$sk_b = sk + R_b \,. \qquad\qquad (11)$$

Once generated, the blinded public/private key pair can be used in communications with other entities, e.g., as described above with reference to FIG. 4.

Similarly to process 400, process 500 blinds public keys across the set of Type-B public keys for a given parameter matrix A but not necessarily across different parameter matrices $A$ and $A'$. That said, without knowing blinding parameter $R_b$, the unblinded public key cannot be computed from the blinded public key. Accordingly, an entity that performs process 500 can provide blinded public key $pk_b$ in the clear without revealing the static secret key *pk.* Like the unblinded key pair *(pk, sk),* blinded key pair $(pk_b, sk_b)$ has the property that messages encrypted using $pk_b$ can be decrypted using $sk_b$. Thus, an entity can use process 500 to generate a new blinded key pair $(pk_b, sk_b)$ for each transaction or other communication session in which the entity participates.

Like process 400, process 500 is an example of a minimally invasive blinding process, in that the error term (which represents noise and can lead to incorrect results when it becomes large) is controlled. Thus, the blinding process 500 has minimal effect on correctness of encryption/decryption operations.

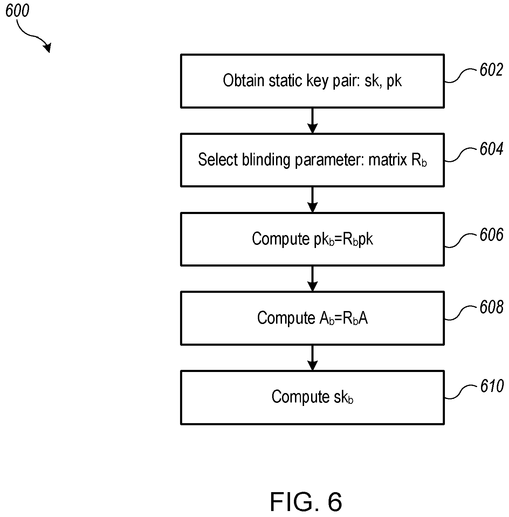

Each of processes 400 and 500 is applicable to a specific type of lattice-based key pair. Some embodiments provide blinding processes that can be applied to keys of either type; however, such processes might not be minimally invasive. FIG. 6 shows a flow diagram of a process 600 for blinding a lattice-based public/private key pair of either Type A or Type B according to some embodiments. Process 600 can be performed by any entity (e.g., computer system or other electronic device) that participates in secure communication and uses a lattice-based static key pair of either Type A or Type B. Process 600 can begin at block 602, with obtaining a lattice-based static key pair, which can be either a key pair of Type A or a key pair of Type B. At block 604, a blinding parameter is selected. In this example, the blinding parameter is a matrix $R_b \in \mathbb{Z}_q^{n \times m}$, which can be selected by randomly sampling the same distribution as matrix R. At block 606, a blinded public key $pk_b$ can be computed as:

$$pk_b = R_b \cdot pk. \qquad (12)$$

For key pairs of Type A, Eq. (12) yields:

$$pk_b = R_b \cdot (A\vec{s} + \vec{e}), \qquad (13)$$

and for key pairs of Type B, Eq. (12) yields:

$$pk_b = R_b \cdot RA. \qquad (14)$$

At block 608, a blinded parameter matrix $A_b$ can be computed as:

$$A_b = R_b \cdot A. \qquad (15)$$

At block 610, a blinded secret key can be computed. For a key pair of Type A, the blinded secret key can be computed as:

$$sk_b = sk + R_b, \qquad (16a)$$

and for a key pair of Type B, the blinded secret key can be computed as:

$$sk_b = R_b \cdot R. \qquad (16b)$$

Once generated, the blinded public/private key pair can be used in communications with other entities, e.g., as described above with reference to FIG. 4.

In some embodiments, process 600 can blind public keys across different parameter matrices A and A'. As with other embodiments described herein, without knowing blinding parameter $R_b$, the unblinded key pair cannot be computed from the blinded key pair. Unlike processes 400 and 500, process 600 is not minimally invasive because Eq. (12) can introduce multiplicative noise, which can cause significant error growth. Appropriate choices of public key encryption parameters can keep the error growth controlled to a desired degree.

It will be appreciated that the blinding processes described herein are illustrative and that variations or modifications are possible. For example, operations described with reference to a single block can be performed at different times, operations described with reference to different blocks can be combined into a single operation, order of operations can be varied (except where logic dictates otherwise), and some operations may be omitted entirely.

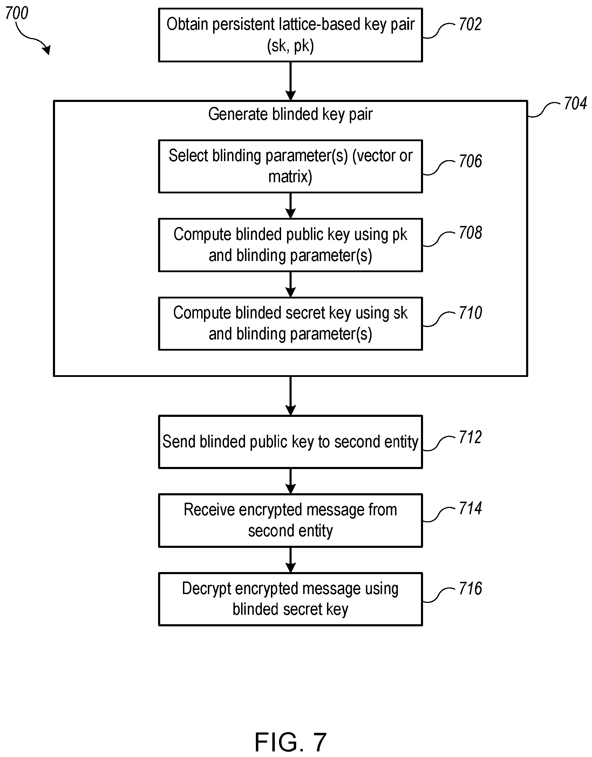

In some embodiments, blinded public/private key pairs generated by an entity can be used by that entity in communications with other entities. By way of example, FIG. 7 is a flow diagram of a process 700 for communicating with a second entity according to some embodiments. Process 700 can be performed by any entity (e.g., computer system or other electronic device) that participates in secure communication with a second entity and uses a lattice-based static key pair. Process 700 can begin at block 702, with obtaining a lattice-based static key pair. In some embodiments, the secret key of a static key pair can be stored in secure storage accessible only to the entity that owns the key pair, while the public key can be stored in local storage of the entity (which can be secure storage) and/or at a certificate authority (CA). Obtaining the static key pair can include reading the stored secret and public keys.

At block 704, a blinded public/private key pair is generated. For example, at block 706, one or more blinding parameters, including at least one vector or at least one matrix, can be selected. The blinding parameters can be, e.g., a pair of vectors (which can be selected as at block 404 of process 400) or a matrix (which can be selected as at block 504 of process 500 or block 604 of process 600). In other embodiments, other blinding parameters can be selected in addition to or instead of the blinding parameters described above. Each blinding parameter can be selected by random sampling from a distribution associated with the lattice-based key encapsulation mechanism, as in examples described above. At block 708, a blinded public key can be generated from the static public key and the blinding parameter(s), and at block 710 a blinded secret key can be generated from the static secret key and the blinding parameter(s). Operations at blocks 708 and 710 can include, e.g., any of the operations described above with reference to blocks 406 and 408 of process 400; blocks 506 and 508 of process 500; or blocks 606, 608, and 610 of process 600.

At block 712, the blinded public key can be sent to a second entity, which can be any computer system or other electronic device with which the entity executing process 700 intends to communicate securely. In some embodiments, sending a lattice-based public key can include sending a parameter matrix $A$ associated with the public key (e.g., a parameter matrix $A$ as described above). At block 714, an encrypted message can be received from the second entity. The encrypted message is presumed to have been encrypted using the blinded public key. At block 716, the encrypted message can be decrypted using the blinded secret key.

It will be appreciated that process 700 is illustrative and that variations or modifications are possible. For example, operations described with reference to a single block can be performed at different times, operations described with reference to different blocks can be combined into a single operation, order of operations can be varied (except where logic dictates otherwise), and some operations may be omitted entirely. Any type of blinding operation suitable for lattice-based keys can be applied at block 704, including any of the operations described above or a combination thereof. The key blinding techniques described herein can be used for different types of distributions for lattice-based key parameters $\vec{e}$ and R, including Gaussian distributions, uniform distributions within a small interval, and the binomial distribution. Security of the blinded keys follows from the security of lattice-based public key encryption under the same parameter regime and choice of distributions for lattice-based key parameters $\vec{e}$ and R.

In some embodiments, blinded public keys can be incorporated into secure communication session protocols of the kind shown in FIGs. 2 and 3. Examples will now be described.

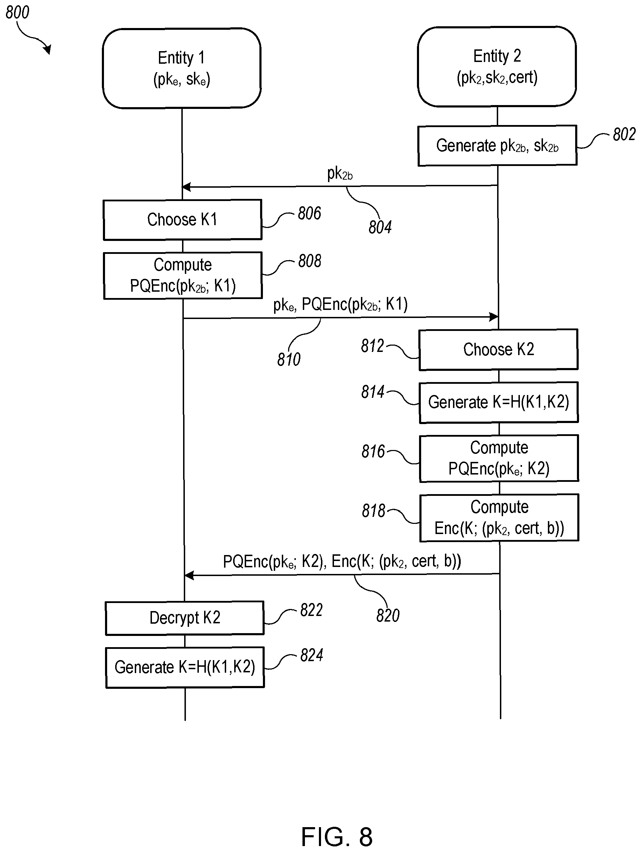

FIG. 8 shows a flow diagram of a process 800 for one-way authentication between two entities ("Entity 1" and "Entity 2") using lattice-based keys according to some embodiments. Entity 1 and Entity 2 can be, for example, two computer systems or other electronic devices that are to participate in a secure communication session. It is assumed that Entity 1 desires to authenticate Entity 2. It is also assumed that Entity 2 has a static lattice-based public/private key pair ($pk_2$, $sk_2$) and a digital certificate *(cert)* while Entity 1 has an ephemeral lattice-based public/private key pair ($pk_e$, $sk_e$). Each key pair can be of Type A or Type B. The ephemeral key pair may be generated, e.g., in response to Entity 1 determining that a secure communication session with Entity 2 should be established.

Process 800 can begin at block 802, where Entity 2 can generate a blinded key pair ($pk_{2b}$, $sk_{2b}$) from its static key pair ($pk_2$, $sk_2$), e.g., using any of the techniques described above with reference to FIGs. 4-7. At message 804, Entity 2 can send the blinded public key $pk_{2b}$ to Entity 1. In some embodiments, sending a lattice-based public key can include sending a parameter matrix $A$ associated with the public key (e.g., a parameter matrix $A$ as described above). At block 806, Entity 1 can choose an arbitrary parameter $K1$, which can be a random value suitable for use as a symmetric key. At block 808, Entity 1 can encrypt parameter $K1$ using blinded public key $pk_{2b}$ and a post-quantum encryption algorithm $PQEnc(\cdot)$, which can implement lattice-based public key encryption. At message 810, Entity 1 can send its ephemeral public key $pk_e$ and the encrypted $K1$ to Entity 2. Entity 2 has the blinded secret key $sk_{2b}$ and can decrypt $K1$.

At block 812, Entity 2 can choose another arbitrary parameter K2, which can be another a random value suitable for use as a symmetric key. At block 814, Entity 2 can generate a session key *(K),* for example by using a hash function *H(K1, K2).* At block 816, Entity 2 can encrypt $K2$ using the ephemeral public key $pk_e$ received via message 810 and a post-quantum encryption algorithm $PQEnc(\cdot)$. At block 818, Entity 2 can also encrypt its static (non-blinded) public key $pk_2$, certificate *cert,* and the blinding parameter(s) used to generate blinded public key $pk_{2b}$ (represented by parameter $b$ in the drawing) using session key $K$ and an encryption algorithm $Enc(\cdot)$, which can be, for instance, a conventional symmetric-key encryption algorithm. At message 820, Entity 2 can send the encrypted parameter K2, and the encrypted public key, certificate, and blinding parameter to Entity 1.

At block 822, Entity 1 can decrypt the encrypted parameter K2 using its ephemeral secret key $sk_e$. At block 824, Entity 1 can generate session key $K$ using the same computation used by Entity 2 at block 212. Thereafter, Entity 1 can decrypt the message containing the certificate, static public key $pk_2$, and blinding parameter and can proceed with certificate validation and/or digital signature verification using appropriate cryptographic techniques. (For instance, all keys involved may be quantum-secure keys and quantum-secure techniques as described above can be used to perform signature verification.) In some embodiments, the validation and verification processes can include confirming that the blinded public key $pk_{2b}$ that was received at message 804 corresponds to a result of applying the blinding parameter received at message 820 to static public key $pk_2$. Once verification is complete, Entity 1 and Entity 2 can continue to communicate securely using session key K.

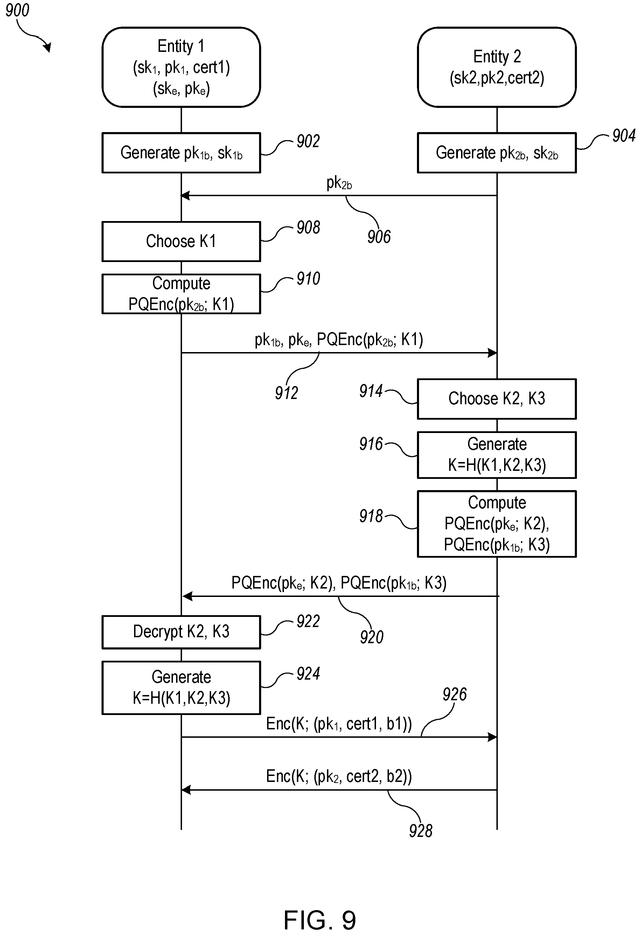

FIG. 9 shows a flow diagram of a process 900 for two-way authentication between two entities ("Entity 1" and "Entity 2") using lattice-based keys according to some embodiments. Entity 1 and Entity 2 can be, for example, two computer systems or other electronic devices that are to participate in a secure communication session. It is assumed that Entity 1 desires to authenticate Entity 2 and vice versa. It is also assumed that Entity 1 has a static post-quantum public/private key pair ($pk_1$, $sk_1$) and a digital certificate (*cert*1) and that Entity 2 also has a static post-quantum public/private key pair ($pk_2$, $sk_2$) and a digital certificate (*cert2).* In this example, Entity 1 also uses an ephemeral post-quantum public/private key pair ($pk_e$, $sk_e$), similarly to FIG. 8. Each key pair can be of Type A or Type B.

Process 900 can begin at block 902, where Entity 1 can generate a blinded key pair ($pk_{1b}$, $sk_{1b}$) from static key pair ($pk_1$, $sk_1$), e.g., using any of the techniques described above with reference to FIGs. 4-7. Similarly, at block 904, Entity 2 can generate a blinded key pair ($pk_{2b}$, $sk_{2b}$) from static key pair ($pk_2$, $sk_2$), e.g., using any of the techniques described above with reference to FIGs. 4-7. At message 906, Entity 2 can send its blinded public key $pk_{2b}$ to Entity 1. In some embodiments, sending a lattice-based public key can include sending a parameter matrix $A$ associated with the public key (e.g., a parameter matrix $A$ as described above).

At block 908, Entity 1 can choose an arbitrary parameter $K1$, which can be a random value suitable for use as a symmetric key. At block 910, Entity 1 can encrypt parameter $K1$ using blinded public key $pk_{2b}$ and a post-quantum encryption algorithm $PQEnc(\cdot)$, which can implement lattice-based public key encryption. At message 912, Entity 1 can send its blinded public key $pk_{1b}$, its ephemeral public key $pk_e$, and the encrypted $K1$ to Entity 2. Entity 2 has the blinded secret key $sk_{2b}$ and can decrypt $K1$.

At block 914, Entity 2 can choose two additional arbitrary parameters K2 and K3, each of which can be a random value suitable for use as a symmetric key. At block 916, Entity 2 can generate a session key *(K),* for example by using a hash function *H(K1, K2, K3).* At block 918, Entity 2 can encrypt parameter $K2$ using the ephemeral public key $pk_e$ received via message 308 and a post-quantum encryption algorithm $PQEnc(\cdot)$ and encrypt parameter K3 using the blinded public key $pk_{1b}$ received via message 308 and a post-quantum encryption algorithm $PQEnc(\cdot)$. At message 920, Entity 2 can send the encrypted parameters K2 and K3 to Entity 1.

At block 922, Entity 1 can decrypt parameter $K2$ using its ephemeral secret key $sk_e$ and decrypt parameter K3 using its blinded secret key $sk_{1b}$. At block 924, Entity 1 can generate session key K using the same computation used by Entity 2 at block 916. Thereafter, Entity 1 and Entity 2 can exchange digital certificates *cert*1 and *cert2,* static public keys $pk_1$ and $pk_2$, and blinding parameters (represented by parameters *b*1 and b2 in the drawing) using messages encrypted using session key K, as shown at messages 926, 928. Each entity can decrypt the message containing the other entity's certificate and static public key and can proceed with certificate validation and/or digital signature verification using appropriate cryptographic techniques. (For instance, all keys involved may be quantum-secure keys and quantum-secure techniques as described above can be used to perform signature verification.) In some embodiments, the validation and verification processes performed by Entity 1 can include confirming that the blinded public key $pk_{2b}$ that was received at message 906 corresponds to a result of applying the blinding parameter received at message 928 to static public key $pk_2$. Likewise, the validation and verification processes performed by Entity 2 can include confirming that the blinded public key $pk_{1b}$ that was received at message 912 corresponds to a result of applying the blinding parameter received at message 926 to static public key $pk_1$. Once validation and verification is complete, Entity 1 and Entity 2 can continue to communicate securely using session key K.

It will be appreciated that processes 800 and 900 are illustrative and that variations or modifications are possible. For example, operations described with reference to a single block can be performed at different times, operations described with reference to different blocks can be combined into a single operation, order of operations can be varied (except where logic dictates otherwise), and some operations may be omitted entirely. Any type of blinding operation suitable for lattice-based key pairs can be used in connection with process 800 or process 900. In the case of process 900, each entity can use the same key blinding operation (with independently selected blinding parameters) or a different key blinding operation. The number of secret parameters (*K*1, *K2, K3,* etc.) exchanged can be modified as desired. For instance, in some embodiments using two-way authentication, parameter K2 can be omitted, in which case ephemeral keys $pk_e$ and $sk_e$ can also be omitted. Alternatively, a larger number of secret parameters can be exchanged, and a different blinded or ephemeral key pair can be used in connection with each such parameter. Particular algorithms for generating session keys from secret parameters can be chosen as desired, and the session key(s) can include a symmetric key and/or an asymmetric key pair as desired. Blinding parameter(s) used by one device can be, but need not be, provided to the other device. If the blinding parameter(s) are not provided, then comparing a blinded public key to the corresponding static public key can be omitted.

Unlike processes 200 and 300, processes 800 and 900 do not require any static keys to be sent in the clear. In some embodiments, the only keys sent in the clear can be an ephemeral public key, which is presumed to be generated afresh for each session, and one or more blinded public keys, which are also presumed to be generated afresh for each session. Thus, third-party tracking of an entity across multiple communication sessions or transactions based on the entity's static public key can be avoided. In addition, provided that no messages are encrypted using a static public key, a third party who manages to obtain the static secret key would not be enable to decrypt communications from authorized transactions.

## Computer Implementation

Processes described herein can be implemented in any type of computer system or other electronic device that has communication capability and that implements post-quantum encryption technology such as a lattice-based KEM. In some embodiments, a computer system includes a single computer apparatus, where the subsystems can be components of the computer apparatus. The computer apparatus can have a variety of form factors including, e.g., a smart phone, a tablet computer, a laptop computer, a desktop computer, etc. In other embodiments, a computer system can include multiple computer apparatuses, each being a subsystem, with internal components.

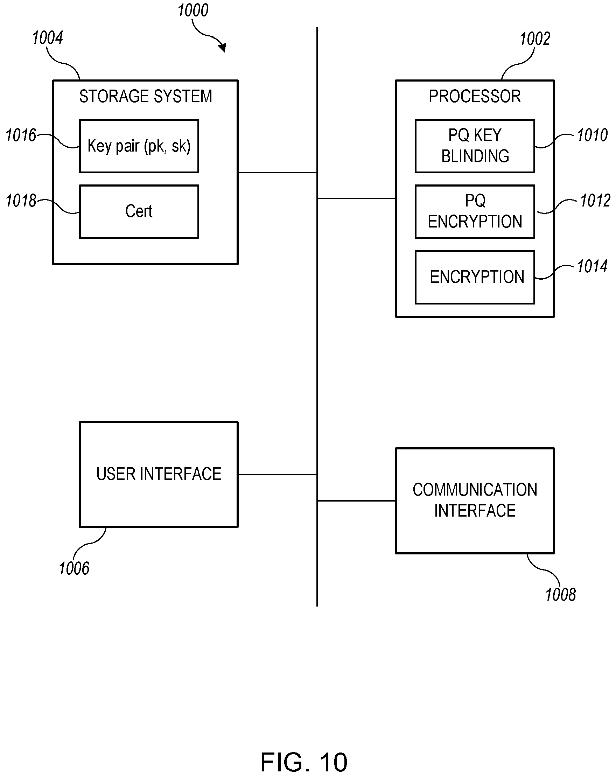

FIG. 10 shows a simplified block diagram of a general-purpose computer system 1000 configured to execute various processes according to some embodiments. Computer system 1000 includes a processor 1002, a storage system 1004, a user interface 1006, and a communication interface 1008. Processor 1002 can include one or more microprocessors or microcontrollers programmed to execute various operations, including operations described herein. For example, processor 1002 can execute program code implementing a post-quantum key blinding module 1010 (which can implement portions of any or all of processes 400, 500, or 600 described above); a post-quantum encryption module 1012 implementing post-quantum encryption and decryption processes, e.g., using lattice-based KEM; and a conventional encryption module 1014 implementing conventional encryption and decryption processes. Processor 1002 can also implement other operational modules, such as modules to manage transactions, process data received in a transaction, and so on.

Storage system 1004 can include any combination of non-transitory storage hardware for data (including program code), such as magnetic disk, optical disk, flash memory, DRAM, SRAM, programmable read-only memory, or the like. Storage system 1004 can store program code for execution by processor 1002 as well as data that may be consumed or produced by processor 1002. A portion of storage system 1004 can provide a secure storage medium such as a hardware security module or secure element. In some embodiments, data stored by storage subsystem 1004 can include a static post-quantum public/private key pair *(pk, sk)* 1016 and a digital certificate *(cert)* 1018 for computer system 1000. In some embodiments, secret key *sk* can be stored in a secure storage medium while public key *pk* and digital certificate *cert* are stored in either the secure storage medium or another storage medium.

User interface 1006 can include conventional hardware components such as a display, keyboard, keypad, touchscreen, speakers, microphone, and/or any other component that can be operated to receive input from and/or present output to a user. In some embodiments, user interface 1006 can be minimal or nonexistent.

Communication interface 1008 can include conventional hardware components such as antennas and supporting baseband hardware for wireless communication using standard protocols, such as Bluetooth, Wi-Fi, or NFC, and/or proprietary protocols as desired. In addition or instead, communication interface 1008 can include hardware components for wired communication, such as a USB connectors, an Ethernet connector, or one or more other connectors. Communication interface 1008 can also include supporting control logic to operate the communication hardware; such control logic can be implemented using dedicated logic devices (e.g., FPGA or ASIC) and/or program code executing on a suitable processor, which can be processor 1002 or a different programmable microprocessor. Depending on implementation, communication interface 1008 can support point-to-point communication or communication via a local or wide area network (including the internet).

A computer system can include a plurality of the components or subsystems, e.g., connected together by external interface or by an internal interface. In some embodiments, computer systems, subsystems, or apparatuses can communicate over a network. In such instances, one computer can be considered a client and another computer a server, where each can be part of a same computer system. A client and a server can each include multiple systems, subsystems, or components.

Computer systems can be implemented in a variety of form factors and devices ranging from server farms to desktop or laptop computers to special purpose devices such as point-of-sale (POS) terminals to mobile devices such as smart phones, tablets, or wearable devices. In some embodiments, a computer system can be of ultra-compact and low-power design. For example, a "smart card" can incorporate an NFC interface for short-range communication with another device such as a POS terminal, secure storage for a key pair and certificate, and logic circuitry implementing the blinding, encryption, decryption, and other operations needed to communicate with the other device. In some embodiments, the smart card can draw operating power from the near-field electromagnetic radiation of the POS terminal or another external source.

It should be understood that any of the embodiments of the present invention can be implemented in the form of control logic using hardware (e.g., an application specific integrated circuit or field programmable gate array) and/or using computer software with a generally programmable processor in a modular or integrated manner. As used herein a processor includes a single-core processor, multi-core processor on a same integrated chip, or multiple processing units on a single circuit board or networked. Based on the disclosure and teachings provided herein, a person of ordinary skill in the art will know and appreciate other ways and/or methods to implement embodiments of the present invention using hardware and a combination of hardware and software.

Any of the software components or functions described in this application may be implemented as software code to be executed by a processor using any suitable computer language such as, for example, Java, C, C++, C#, Objective-C, Swift, or scripting language such as Perl or Python using, for example, conventional or object-oriented techniques. The software code may be stored as a series of instructions or commands on a computer readable medium for storage and/or transmission, suitable media include random access memory (RAM), a read only memory (ROM), a magnetic medium such as a hard-drive or a floppy disk, or an optical medium such as a compact disk (CD) or DVD (digital versatile disk), flash memory, and the like. The computer readable medium may be any combination of such storage or transmission devices.

Such programs may also be encoded and transmitted using carrier signals adapted for transmission via wired, optical, and/or wireless networks conforming to a variety of protocols, including the Internet. As such, a computer readable medium according to an embodiment of the present invention may be created using a data signal encoded with such programs. Computer readable media encoded with the program code may be packaged with a compatible device or provided separately from other devices (e.g., via Internet download). Any such computer readable medium may reside on or within a single computer product (e.g. a hard drive, a CD, or an entire computer system), and may be present on or within different computer products within a system or network. A computer system may include a monitor, printer or other suitable display for providing any of the results mentioned herein to a user.

Any of the methods described herein may be totally or partially performed with a computer system including one or more processors, which can be configured to perform the steps. Thus, embodiments can involve computer systems configured to perform the steps of any of the methods described herein, potentially with different components performing a respective steps or a respective group of steps. Although presented as numbered steps, steps of methods herein can be performed at a same time or in a different order. Additionally, portions of these steps may be used with portions of other steps from other methods. Also, all or portions of a step may be optional. Additionally, and of the steps of any of the methods can be performed with modules, circuits, or other means for performing these steps.

## Additional Embodiments

Embodiments described herein provide blinding techniques for post-quantum (or quantum-secure) public keys and communication protocols that include using a blinded public key to avoid sending a public key in the clear. Such techniques can be implemented in any context where two electronic devices use post-quantum encryption techniques to communicate information. The specific details of particular embodiments may be combined in any suitable manner without departing from the scope of embodiments of the invention. However, other embodiments of the invention may be involve specific embodiments relating to each individual aspect, or specific combinations of these individual aspects.

In examples described above, a new blinded public key (and corresponding blinded secret key) is generated for each communication session; however, storage and reuse of blinded keys is not precluded. For instance, a device that generates blinded keys may store and reuse a blinded key (e.g., for subsequent transactions with the same counterpart device). In such cases, third-party tracking of a device across instances of reuse of the same blinded public key may be possible.

In examples described above, the information communicated between devices is usable to generate a symmetric session key for a secure communication session. A secure communication session can continue for as long as both entities desire to maintain the session. Any amount and type of data can be exchanged within a secure communication session, including but not limited to certificates and digital signatures.

A recitation of "a", "an" or "the" is intended to mean "one or more" unless specifically indicated to the contrary. The use of "or" is intended to mean an "inclusive or," and not an "exclusive or" unless specifically indicated to the contrary.

The above description is illustrative and is not restrictive. Many variations of the invention will become apparent to those skilled in the art upon review of the disclosure. The scope of patent protection should, therefore, be determined not with reference to the above description, but instead should be determined with reference to the following claims along with their full scope.

## Claims

1. A method performed by a first electronic device, the method comprising:

obtaining (102, 106, 402, 502, 602, 702) a static key pair comprising a static secret key and a static public key, wherein the static key pair conforms to a lattice-based key encapsulation mechanism and is based on a distribution associated with the lattice-based key encapsulation mechanism;
selecting (404, 504, 604, 706) a blinding parameter, wherein the blinding parameter includes at least one vector or matrix selected by random sampling from the distribution associated with the lattice-based key encapsulation mechanism;
computing (406, 506, 606, 708) a blinded public key using the static public key and the blinding parameter;
computing (408, 508, 610, 710) a blinded secret key using the static secret key and the blinding parameter;
sending (712) the blinded public key to a second electronic device;
receiving (120, 714) an encrypted message from the second electronic device; and
decrypting (122, 716) the encrypted message using the blinded secret key.

2. The method of claim 1 wherein the static secret key corresponds to a first vector $\vec{s}$ and the static public key $pk$ corresponds to a second vector equal to $A\vec{s} + \vec{e}$, wherein $A$ is a parameter matrix and $\vec{e}$ is an error vector, and wherein:

selecting (404) the blinding parameter includes selecting a first blinding vector $\vec{s}_b$ and a second blinding vector $\vec{e}_b$; and

computing (406) the blinded public key includes computing a third blinding vector equal to $A\vec{s}_b + \vec{e}_b$ and adding the third blinding vector to the static public key $pk$.

3. The method of claim 2 wherein computing (408) the blinded secret key includes adding the first blinding vector $\vec{s}_b$ to the static secret key $sk$.

4. The method of claim 1 wherein the static secret key corresponds to a first matrix R and the static public key $pk$ corresponds to a matrix product R · A, wherein A is a parameter matrix, and wherein:

selecting (504) the blinding parameter includes selecting a further matrix $R_b$; and

computing (506) the blinded public key includes computing a matrix product equal to $R_b \cdot A$ and adding the matrix product to the static public key $pk$.

5. The method of claim 4 wherein computing (508) the blinded secret key includes adding the further matrix $R_b$ to the static secret key $sk$.

6. The method of claim 1 wherein:

selecting (604) the blinding parameter includes selecting a blinding matrix $R_b$; and

computing (606) the blinded public key includes computing a product $R_b \cdot pk$, wherein $pk$ is the static public key.

7. The method of any of claims 1 to 6, wherein the decrypted message includes a first parameter $K1$ usable to generate a session key and wherein the method further comprises:

receiving (804, 906) a public key from the second electronic device;

generating (812, 914) a second parameter $K2$;

generating (814, 916) a session key based at least in part on the first parameter $K1$ and the second parameter K2; and

sending (820, 920) the second parameter K2 to the second electronic device in a message encrypted using the public key received from the second electronic device.

8. A first electronic device (1000) comprising:

a storage system (1004) configured to store a static key pair comprising a static secret key and a static public key, wherein the static key pair conforms to a lattice-based key encapsulation mechanism and is based on a distribution associated with the lattice-based key encapsulation mechanism;

a network interface (1008) configured to communicate with a second electronic device; and

a processor (1002) coupled to the storage system and the network interface, the processor being configured to:

select a blinding parameter, wherein the blinding parameter includes at least one vector or matrix selected by random sampling from the distribution associated with the lattice-based key encapsulation mechanism;

compute a blinded public key using the static public key and the blinding parameter;

compute a blinded secret key using the static secret key and the blinding parameter;

send the blinded public key to the second electronic device;

receive a first encrypted message from the second electronic device; and

decrypt the first encrypted message using the blinded secret key.

9. The first electronic device (1000) of claim 8 wherein the processor (1002) is further configured such that:

in the event that the static secret key corresponds to a first vector $\vec{s}$ and the static public key $pk$ corresponds to a second vector equal to $A\vec{s} + \vec{e}$, wherein $A$ is a parameter matrix and $\vec{e}$ is an error vector:

selecting the blinding parameter includes selecting a first blinding vector $\vec{s}_b$ and a second blinding vector $\vec{e}_b$

and

computing the blinded public key includes computing a third blinding vector equal to $\vec{As_b} + \vec{e_b}$ and adding the third blinding vector to the static public key *pk;*

and

in the event that the static secret key corresponds to a first matrix R and the static public key *pk* corresponds to a matrix R · *A*, wherein A is a parameter matrix, and wherein:

selecting the blinding parameter includes selecting a further matrix $R_b$; and

computing the blinded public key includes computing a matrix product equal to $R_b \cdot A$ and adding the matrix product to the static public key *pk.*

10. The first electronic device (1000) of claim 8 wherein the processor (1002) is further configured such that:

selecting the blinding parameter includes selecting a blinding matrix $R_b$; and

computing the blinded public key includes computing a product $R_b \cdot pk,$ wherein *pk* is the static public key.

11. The first electronic device (1000) of any of claims 8 to 10 wherein the processor (1002) is further configured to:

establish a session key with the second electronic device; and

send a second encrypted message containing the static public key to the second electronic device, wherein the second encrypted message is encrypted using the session key.

12. The first electronic device (1000) of claim 11 wherein the storage system (1004) is further configured to store a digital certificate for the first electronic device and wherein the second encrypted message further includes the digital certificate for the first electronic device.

13. The first electronic device (1000) of any of claims 8 to 12, wherein the first electronic device is configured as a smart card.

14. The first electronic device (1000) of any of claims 8 to 13 wherein the second electronic device is configured as a point-of-sale terminal.

15. A computer-readable storage medium having stored therein program instructions that, when executed by a processor (1002) of a first electronic device (1000), cause the processor to perform a method according to any of claims 1 to 7.

**Patentansprüche**

1. Verfahren, durchgeführt von einer ersten elektronischen Vorrichtung, das Verfahren umfassend:

Erhalten (102, 106, 402, 502, 602, 702) eines statischen Schlüsselpaars, das einen statischen geheimen Schlüssel und einen statischen öffentlichen Schlüssel umfasst, wobei das statische Schlüsselpaar einen gitterbasierten Schlüsselkapselungsmechanismus umfasst und auf einer Verteilung basiert, die dem gitterbasierten Schlüsselkapselungsmechanismus zugeordnet ist;
Auswählen (404, 504, 604, 706) eines Blinding-Parameters, wobei der Blinding-Parameter mindestens einen Vektor oder eine Matrix umfasst, der/die durch Zufallsstichproben aus der dem gitterbasierten Schlüsselkapselungsmechanismus zugeordneten Verteilung ausgewählt wird;
Berechnen (406, 506, 606, 708) eines verblindeten öffentlichen Schlüssels unter Verwendung des statischen öffentlichen Schlüssels und des Blinding-Parameters;
Berechnen (408, 508, 610, 710) eines verblindeten geheimen Schlüssels unter Verwendung des statischen geheimen Schlüssels und des Blinding-Parameters;
Senden (712) des verblindeten öffentlichen Schlüssels an eine zweite elektronische Vorrichtung;
Empfangen (120, 714) einer verschlüsselten Nachricht von der zweiten elektronischen Vorrichtung; und Entschlüsseln (122, 716) der verschlüsselten Nachricht unter Verwendung des verblindeten geheimen Schlüssels.

2. Verfahren nach Anspruch 1, wobei der statische geheime Schlüssel einem ersten Vektor $\vec{s}$ entspricht und der statische öffentliche Schlüssel *pk* einem zweiten Vektor entspricht, der gleich $A\vec{s} + \vec{e}$ ist, wobei A eine Parametermatrix und $\vec{e}$ ein Fehlervektor ist, und wobei:

das Auswählen (404) des Blinding-Parameters das Auswählen eines ersten Blinding-Vektors $\vec{sb}$ und eines zweiten Blinding-Vektors $\vec{eb}$ umfasst; und
das Berechnen (406) des verblindeten öffentlichen Schlüssels das Berechnen eines dritten Blinding-Vektors, der gleich $A\vec{sb} + \vec{eb}$ ist, und das Addieren des dritten Blinding-Vektors zu dem statischen öffentlichen Schlüssel *pk* umfasst.

3. Verfahren nach Anspruch 2, wobei das Berechnen (408) des verblindeten geheimen Schlüssels das Addieren des ersten Blinding-Vektors $\vec{sb}$ zu dem statischen geheimen Schlüssel sk umfasst.

4. Verfahren nach Anspruch 1, wobei der statische geheime Schlüssel einer ersten Matrix *R* entspricht und der statische öffentliche Schlüssel *pk* einem Matrixprodukt *R·A entspricht,* wobei A eine Parametermatrix ist, und wobei:

das Auswählen (504) des Blinding-Parameters das Auswählen einer weiteren Matrix $R_b$ umfasst; und
das Berechnen (506) des verblindeten öffentlichen Schlüssels das Berechnen eines Matrixprodukts, das gleich $R_b \cdot A$ ist, und das Addieren des Matrixprodukts zu dem statischen öffentlichen Schlüssel *pk* umfasst.

5. Verfahren nach Anspruch 4, wobei das Berechnen (508) des verblindeten geheimen Schlüssels das Addieren der weiteren Matrix $R_b$ zu dem statischen geheimen Schlüssel sk umfasst.

6. Verfahren nach Anspruch 1, wobei:

das Auswählen (604) des Blinding-Parameters das Auswählen einer Blinding-Matrix $R_b$ umfasst; und
das Berechnen (606) des verblindeten öffentlichen Schlüssels das Berechnen eines Produkts $R_b \cdot pk$ umfasst, wobei *pk* der statische öffentliche Schlüssel ist.

7. Verfahren nach einem Ansprüche 1 bis 6, wobei die entschlüsselte Nachricht einen ersten Parameter *K1* umfasst, der zum Erzeugen eines Sitzungsschlüssels verwendbar ist, und wobei das Verfahren ferner umfasst:

Empfangen (804, 906) eines öffentlichen Schlüssels von der zweiten elektronischen Vorrichtung;
Erzeugen (812, 914) eines zweiten Parameters K2,
Erzeugen (814, 916) eines Sitzungsschlüssels, der mindestens teilweise auf dem ersten Parameter K1 und dem zweiten Parameter K2 basiert; und
Senden (820, 920) des zweiten Parameters K2 an die zweite elektronische Vorrichtung in einer Nachricht, die unter Verwendung des öffentlichen Schlüssels verschlüsselt ist, der von der zweiten elektronischen Vorrichtung empfangen wird.

8. Erste elektronische Vorrichtung (1000), umfassend:

ein Speichersystem (1004), das eingerichtet ist, um ein statisches Schlüsselpaar zu speichern, das einen statischen geheimen Schlüssel und einen statischen öffentlichen Schlüssel umfasst, wobei das statische Schlüsselpaar einem gitterbasierten Schlüsselkapselungsmechanismus entspricht und auf einer dem gitterbasierten Schlüsselkapselungsmechanismus zugeordneten Verteilung basiert;
eine Netzwerkschnittstelle (1008), die dazu eingerichtet ist, mit einer zweiten elektronischen Vorrichtung zu kommunizieren; und
einen Prozessor (1002), der mit dem Speichersystem und der Netzwerkschnittstelle gekoppelt ist, wobei der Prozessor eingerichtet ist, um:

einen Blinding-Parameter auszuwählen, wobei der Blinding-Parameter mindestens einen Vektor oder eine Matrix umfasst, die durch Zufallsstichproben aus der dem gitterbasierten Schlüsselkapselungsmechanismus zugeordneten Verteilung ausgewählt werden;
einen verblindeten öffentlichen Schlüssel unter Verwendung des statischen öffentlichen Schlüssels und des Blinding-Parameters zu berechnen;
einen verblindeten geheimen Schlüssel unter Verwendung des statischen geheimen Schlüssels und des Blinding-Parameters zu berechnen;
den verblindeten öffentlichen Schlüssel an die zweite elektronische Vorrichtung zu senden;
eine erste verschlüsselte Nachricht von der zweiten elektronischen Vorrichtung zu empfangen; und die erste verschlüsselte Nachricht unter Verwendung des verblindeten geheimen Schlüssels zu entschlüsseln.

9. Erste elektronische Vorrichtung (1000) nach Anspruch 8, wobei der Prozessor (1002) ferner derart eingerichtet ist, dass:

falls der statische geheime Schlüssel einem ersten Vektor $\vec{s}$ entspricht und der statische öffentliche Schlüssel $pk$ einem zweiten Vektor entspricht, der gleich $\mathbb{A}\vec{s} + \vec{e}$ ist, wobei $A$ eine Parametermatrix und $\vec{e}$ ein Fehlervektor ist:

das Auswählen des Blinding-Parameters das Auswählen eines ersten Blinding-Vektors $\vec{sb}$ und eines zweiten Blinding-Vektors $\vec{eb}$ umfasst; und
das Berechnen des verblindeten öffentlichen Schlüssels das Berechnen eines dritten Blinding-Vektors gleich $A\vec{sb} + \vec{e}$ und das Addieren des dritten Blinding-Vektors zu dem statischen öffentlichen Schlüssel $pk$ umfasst; und
falls der statische geheime Schlüssel einer ersten Matrix R entspricht und der statische öffentliche Schlüssel $pk$ einer Matrix $R \cdot A$ entspricht, wobei A eine Parametermatrix ist, und wobei:

das Auswählen des Blinding-Parameters das Auswählen einer weiteren Matrix $_{Rb}$ umfasst; und
das Berechnen des verblindeten öffentlichen Schlüssels das Berechnen eines Matrixprodukts gleich $R_b \cdot A$ und das Addieren des Matrixprodukts zu dem statischen öffentlichen Schlüssel pk umfasst.

10. Erste elektronische Vorrichtung (1000) nach Anspruch 8, wobei der Prozessor (1002) ferner derart eingerichtet ist, dass:
das Auswählen des Blinding-Parameters das Auswählen einer Blinding-Matrix $R_b$ umfasst; und das Berechnen des verblindeten öffentlichen Schlüssels das Berechnen eines Produkts $R_b \cdot pk$ umfasst, wobei $pk$ der statische öffentliche Schlüssel ist.

11. Erste elektronische Vorrichtung (1000) nach einem der Ansprüche 8 bis 10, wobei der Prozessor (1002) ferner eingerichtet ist, um:

einen Sitzungsschlüssel mit der zweiten elektronischen Vorrichtung aufzubauen; und
eine zweite verschlüsselten Nachricht, die den statischen öffentlichen Schlüssel umfasst, an die zweite elektronische Vorrichtung zu senden, wobei die zweite verschlüsselte Nachricht unter Verwendung des Sitzungsschlüssels verschlüsselt wird.

12. Erste elektronische Vorrichtung (1000) nach Anspruch 11, wobei das Speichersystem (1004) ferner dazu eingerichtet ist, ein digitales Zertifikat für die erste elektronische Vorrichtung zu speichern, und wobei die zweite verschlüsselte Nachricht ferner das digitale Zertifikat für die erste elektronische Vorrichtung umfasst.

13. Erste elektronische Vorrichtung (1000) nach einem der Ansprüche 8 bis 12, wobei die erste elektronische Vorrichtung als eine Chipkarte eingerichtet ist.

14. Erste elektronische Vorrichtung (1000) nach einem der Ansprüche 8 bis 13, wobei die zweite elektronische Vorrichtung als ein Kassenterminal eingerichtet ist.

15. Computerlesbares Speichermedium, auf dem Programmbefehle gespeichert sind, die, wenn sie von einem Prozessor (1002) einer ersten elektronischen Vorrichtung (1000) ausgeführt werden, den Prozessor veranlassen, ein Verfahren nach einem der Ansprüche 1 bis 7 auszuführen.

**Revendications**

1. Procédé réalisé par un premier dispositif électronique, le procédé comprenant :

l'obtention (102, 106, 402, 502, 602, 702) d'une paire de clés statiques comprenant une clé secrète statique et une clé publique statique, dans laquelle la paire de clés statiques se conforme à un mécanisme d'encapsulation de clé basé sur un réseau et est basée sur une distribution associée au mécanisme d'encapsulation de clé basé sur un réseau ;
la sélection (404, 504, 604, 706) d'un paramètre de masquage, dans lequel le paramètre de masquage comprend l'au moins un vecteur ou une matrice sélectionné par échantillonnage aléatoire à partir de la distribution associée au mécanisme d'encapsulation de clé basé sur un réseau ;
le calcul (406, 506, 606, 708) d'une clé publique masquée à l'aide de la clé publique statique et du paramètre de masquage ;
le calcul (408, 508, 610, 710) d'une clé secrète masquée en utilisant la clé secrète statique et le paramètre de masquage ;
l'envoi (712) de la clé publique masquée à un deuxième dispositif électronique ;
la réception (120, 714) d'un message crypté à partir du deuxième dispositif électronique ; et le décryptage (122, 716) du message crypté à l'aide de la clé secrète masquée.

2. Procédé selon la revendication 1, dans lequel la clé secrète statique correspond à un premier vecteur $\vec{s}$ et la clé publique statique *pk* correspond à un deuxième vecteur égal à $A\vec{s} + \vec{e}$, dans lequel A est une matrice de paramètres et $\vec{e}$ est un vecteur d'erreur, et dans lequel :

la sélection (404) du paramètre de masquage comprend la sélection d'un premier vecteur de masquage $\vec{sb}$ et d'un deuxième vecteur de masquage $\vec{eb}$ ; et
le calcul (406) de la clé publique masquée comprend le calcul d'un troisième vecteur de masquage égal à $A\vec{sb} + \vec{eb}$ et l'ajout du troisième vecteur de masquage à la clé publique statique *pk*.

3. Procédé selon la revendication 2, dans lequel le calcul (408) de la clé secrète masquée comprend l'ajout du premier vecteur de masquage $\vec{sb}$ à la clé secrète statique sk.

4. Procédé selon la revendication 1, dans lequel la clé secrète statique correspond à une première matrice R et la clé publique statique *pk* correspond à un produit matriciel $R{\cdot}A$, dans lequel A est une matrice de paramètres, et dans lequel :

la sélection (504) du paramètre de masquage comprend la sélection d'une autre matrice $R_b$ ; et
le calcul (506) de la clé publique masquée comprend le calcul d'un produit matriciel égal à $R_b{\cdot}A$ et l'ajout du produit matriciel à la clé publique statique *pk*.

5. Procédé selon la revendication 4, dans lequel le calcul (508) de la clé secrète masquée comprend l'ajout de la matrice supplémentaire $R_b$ à la clé secrète statique sk.

6. Procédé selon la revendication 1, dans lequel :

la sélection (604) du paramètre de masquage comprend la sélection d'une matrice de masquage $R_b$ ; et

le calcul (606) de la clé publique masquée comprend le calcul d'un produit $R_b \cdot pk$, où $pk$ est la clé publique statique.

7. Procédé selon l'une quelconque des revendications 1 à 6, dans lequel le message décrypté comprend un premier paramètre $K1$ utilisable pour générer une clé de session et dans lequel le procédé comprend en outre :

la réception (804, 906) d'une clé publique à partir du deuxième dispositif électronique ;
la génération (812, 914) d'un deuxième paramètre K2,
la génération (814, 916) d'une clé de session basée au moins en partie sur le premier paramètre K1 et le deuxième paramètre $K2$ ; et
l'envoi (820, 920) du deuxième paramètre K2 au deuxième dispositif électronique dans un message crypté à l'aide de la clé publique reçue du deuxième dispositif électronique.

8. Premier dispositif électronique (1000) comprenant :

un système de stockage (1004) configuré pour stocker une paire de clés statiques comprenant une clé secrète statique et une clé publique statique, dans lequel la paire de clés statiques se conforme à un mécanisme d'encapsulation de clé basé sur un réseau et est basée sur une distribution associée au mécanisme d'encapsulation de clé basé sur un réseau ;
une interface de réseau (1008) configurée pour communiquer avec un deuxième dispositif électronique ; et
un processeur (1002) couplé au système de stockage et à l'interface réseau, le processeur étant configuré pour :

sélectionner un paramètre de masquage, dans lequel le paramètre de masquage comprend au moins un vecteur ou une matrice sélectionné par échantillonnage aléatoire à partir de la distribution associée au mécanisme d'encapsulation de clé basé sur le réseau ;
calculer une clé publique masquée à l'aide de la clé publique statique et du paramètre de masquage ;
calculer une clé secrète masquée à l'aide de la clé secrète statique et du paramètre de masquage ;
envoyer la clé publique masquée au deuxième dispositif électronique ;
recevoir un premier message crypté du deuxième dispositif électronique ; et décrypter le premier message crypté à l'aide de la clé secrète masquée.

9. Premier dispositif électronique (1000) selon la revendication 8, dans lequel le processeur (1002) est en outre configuré de telle sorte que :

dans le cas où la clé secrète statique correspond à un premier vecteur $\vec{s}$ et la clé publique statique $pk$ correspond à un deuxième vecteur égal à $A\vec{s} + \vec{e}$, où A est une matrice de paramètres et $\vec{e}$ est un vecteur d'erreur :

la sélection du paramètre de masquage comprend la sélection d'un premier vecteur de masquage $\vec{sb}$ et d'un deuxième vecteur de masquage $\vec{eb}$ et

le calcul de la clé publique masquée comprend le calcul d'un troisième vecteur de masquage égal à $A\vec{sb} + \vec{e}$ et l'ajout du troisième vecteur de masquage à la clé publique statique $pk$ ; et
dans le cas où la clé secrète statique correspond à une première matrice R et la clé publique statique $pk$ correspond à une matrice $R \cdot A$, où A est une matrice de paramètres, et dans lequel :

la sélection du paramètre de masquage comprend la sélection d'une autre matrice Rb ; et
le calcul de la clé publique masquée comprend le calcul d'un produit matriciel égal à $R_b \cdot A$ et l'ajout du produit matriciel à la clé publique statique $pk$.

10. Premier dispositif électronique (1000) selon la revendication 8, dans lequel le processeur (1002) est en outre configuré de telle sorte que :
la sélection du paramètre de masquage comprend la sélection d'une matrice de masquage $R_b$ et le calcul de la clé publique masquée comprend le calcul d'un produit $R_b \cdot pk$, où $pk$ est la clé publique statique.

11. Premier dispositif électronique (1000) selon l'une quelconque des revendications 8 à 10, dans lequel le processeur (1002) est en outre configuré pour :

établir une clé de session avec le deuxième dispositif électronique ; et
envoyer un deuxième message chiffré contenant la clé publique statique au deuxième dispositif électronique, dans lequel le deuxième message chiffré est chiffré en utilisant la clé de session.

12. Premier dispositif électronique (1000) selon la revendication 11, dans lequel le système de stockage (1004) est en outre configuré pour stocker un certificat numérique pour le premier dispositif électronique et dans lequel le deuxième message chiffré comprend en outre le certificat numérique pour le premier dispositif électronique.

13. Premier dispositif électronique (1000) selon l'une quelconque des revendications 8 à 12, dans lequel le premier dispositif électronique est configuré comme une carte à puce.

14. Premier dispositif électronique (1000) selon l'une quelconque des revendications 8 à 13, dans lequel le deuxième dispositif électronique est configuré comme un terminal de point de vente.

15. Support de stockage lisible par ordinateur sur lequel sont stockées les instructions du programme qui, lorsqu'elles sont exécutées par un processeur (1002), d'un premier dispositif électronique (1000), amènent le processeur à réaliser un procédé selon l'une quelconque des revendications 1 à 7.

```
          ┌─────────────┐                              ┌─────────────┐
          │   Entity 1  │                              │   Entity 2  │
          └─────────────┘                              └─────────────┘
                 │                                             │
                 │                                             │
          ┌──────────────┐                                     │
          │  Obtain sk=s │ ─── 102                             │
          └──────────────┘                                     │
                 │                                             │
          ┌──────────────┐                                     │
          │  Obtain A, e │ ─── 104                             │
          └──────────────┘                                     │
                 │                                             │
    ┌──────────────────────────┐                               │
    │  Generate pk₁ = (As+e)   │ ─── 106                       │
    └──────────────────────────┘                               │
                 │                                             │
    ┌──────────────────────────┐   110    ┌──────────────────────────────┐
    │  Send (A, pk₁) to Entity 2│────────▶│ Receive (A, pk₁) from Entity 1│
    └──────────────────────────┘          └──────────────────────────────┘
            108                                          │
```

Generate $pk_1 = (As+e)$ — 106

Send $(A, pk_1)$ to Entity 2 — 108

Receive $(A, pk_1)$ from Entity 1 — 110

112 — Choose vector r

114 — Generate message m

116 — Compute $Enc(pk_2;m) = Enc(rA;\, r(As+e)+m)$

118 — Send $Enc(pk_2;m)$ to Entity 1

120 — Receive $Enc(pk_2;m)$ from Entity 2

122 — Compute $m \approx r(As+e)+m - rAs$

FIG. 1

200

FIG. 2

_300_

```
┌─────────────────────┐          ┌─────────────────────┐
│      Entity 1       │          │      Entity 2       │
│  (pk₁, sk₁, cert1)  │          │  (pk2, sk2, cert2)  │
│    (pkₑ, skₑ)       │          │                     │
└─────────────────────┘          └─────────────────────┘
```

Entity 1 $(pk_1, sk_1, \text{cert1})$ $(pk_e, sk_e)$

Entity 2 $(pk2, sk2, \text{cert2})$

$pk_2$ — _302_

| Choose K1 | _304_

| Compute PQEnc($pk_2$; K1) | _306_

$pk_1, pk_e, \text{PQEnc}(pk_2; K1)$ — _308_

_310_ — | Choose K2, K3 |

_312_ — | Generate $K=H(K1,K2,K3)$ |

_314_ — | Compute PQEnc(pke; K2), PQEnc(pk1; K3) |

$\text{PQEnc}(pk_e; K2), \text{PQEnc}(pk_1; K3)$ — _316_

| Decrypt K2, K3 | _318_

| Generate $K=H(K1,K2,K3)$ | _320_

$\text{Enc}(K; \text{cert1})$ — _322_

$\text{Enc}(K; \text{cert2})$ — _324_

FIG. 3

400

| Obtain static key pair: sk = s, pk = As+e | 402 |

$\downarrow$

| Select blinding parameters: vector $s_b$ and vector $e_b$ | 404 |

$\downarrow$

| Compute $pk_b=pk+As_b+e_b$ | 406 |

$\downarrow$

| Compute $sk_b=s+s_b$ | 408 |

FIG. 4

*500*

Obtain static key pair: sk = R, pk = RA — *502*

Select blinding parameter: matrix $R_b$ — *504*

Compute $pk_b = pk + R_b A$ — *506*

Compute $sk_b = sk + R_b$ — *508*

FIG. 5

*600*

Obtain static key pair: sk, pk — *602*

Select blinding parameter: matrix $R_b$ — *604*

Compute $pk_b = R_b pk$ — *606*

Compute $A_b = R_b A$ — *608*

Compute $sk_b$ — *610*

FIG. 6

700

Obtain persistent lattice-based key pair (sk, pk) ⌐ 702

Generate blinded key pair ⌐ 704

Select blinding parameter(s) (vector or matrix) ⌐ 706

Compute blinded public key using pk and blinding parameter(s) ⌐ 708

Compute blinded secret key using sk and blinding parameter(s) ⌐ 710

Send blinded public key to second entity ⌐ 712

Receive encrypted message from second entity ⌐ 714

Decrypt encrypted message using blinded secret key ⌐ 716

FIG. 7

**FIG. 8**

900

| Entity 1 | Entity 2 |
|---|---|
| $(sk_1, pk_1, cert1)$ | $(sk2, pk2, cert2)$ |
| $(sk_e, pk_e)$ | |

Generate $pk_{1b}$, $sk_{1b}$ — 902

Generate $pk_{2b}$, $sk_{2b}$ — 904

$pk_{2b}$

906

Choose K1 — 908

Compute
$PQEnc(pk_{2b}; K1)$ — 910

$pk_{1b}$, $pk_e$, $PQEnc(pk_{2b}; K1)$

912

914 — Choose K2, K3

916 — Generate
$K=H(K1,K2,K3)$

918 — Compute
$PQEnc(pk_e; K2)$,
$PQEnc(pk_{1b}; K3)$

$PQEnc(pk_e; K2)$, $PQEnc(pk_{1b}; K3)$

920

Decrypt K2, K3 — 922

Generate
$K=H(K1,K2,K3)$ — 924

926

$Enc(K; (pk_1, cert1, b1))$

$Enc(K; (pk_2, cert2, b2))$

928

FIG. 9

EP 4 040 716 B1

FIG. 10

31

# EP 4 040 716 B1

## Patent documents cited in the description

- EP 3391620 A1

- WO 2017004470 A1

## Non-patent literature cited in the description

- Algorithms for quantum computation: Discrete logarithms and factoring. **SHOR, PETER W.** Foundations of Computer Science 1994 Proc. 35th Annual Symposium. IEEE, 1994

- **REGEV, ODED.** On lattices, learning with errors, random linear codes, and cryptography.. *Journal of the ACM (JACM)*, 2009, vol. 56 (6), 34